(19) Europäisches Patentamt / European Patent Office / Office européen des brevets

(11) EP 4 650 480 A1

(12) EUROPEAN PATENT APPLICATION
published in accordance with Art. 153(4) EPC

(43) Date of publication:
19.11.2025 Bulletin 2025/47

(21) Application number: 24741596.1

(22) Date of filing: 12.01.2024

(51) International Patent Classification (IPC):
C22C 38/00 (2006.01)  C22C 38/58 (2006.01)
B23K 11/16 (2006.01)  C21D 9/46 (2006.01)
C22C 18/00 (2006.01)  C22C 18/04 (2006.01)

(52) Cooperative Patent Classification (CPC):
C22C 38/00; C22C 38/58; B23K 11/16; C21D 9/46;
C22C 18/00; C22C 18/04

(86) International application number:
PCT/JP2024/000663

(87) International publication number:
WO 2024/150824 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.01.2023 JP 2023003896

(71) Applicant: NIPPON STEEL CORPORATION
Chiyoda-ku
Tokyo 100-8071 (JP)

(72) Inventors:
• MITSUNOBU, Takuya
Tokyo 100-8071 (JP)
• FURUKAWA, Noriyuki
Tokyo 100-8071 (JP)
• OKE, Takashi
Tokyo 100-8071 (JP)
• TAKEBAYASHI, Hiroshi
Tokyo 100-8071 (JP)

(74) Representative: Vossius & Partner
Patentanwälte Rechtsanwälte mbB
Siebertstrasse 3
81675 München (DE)

(54) WELDED JOINT

(57) The present invention has as its object the provision of a welded joint suppressing LME cracking at the time of production. The welded joint of the present invention is provided with high strength steel sheet with a tensile strength of 780 MPa or more. The high strength steel sheet has a predetermined chemical composition. At a region separated by 5 mm or more from an outside end of a nugget, in a depth direction of the high strength steel sheet, a depth with a C concentration measured by GDS of 0.01% or less is 3 $\mu$m or more and a roughness of a surface of the high strength steel sheet is an arithmetic average roughness Ra of 3.0 $\mu$m or less, and in a range of 0 to 100 $\mu$m from an outside end of the weld shoulder part to the outside, in a depth direction from the high strength steel sheet, a thickness of a layer with an area ratio of cementite of 10% or less is 5 $\mu$m or more.

Fig. 2

EP 4 650 480 A1

**Description**

FIELD

The present invention relates to a welded joint. More specifically, the present invention relates to a welded joint suppressing LME cracking at the time of production.

BACKGROUND

In recent years, the steel sheet used in automobiles, household electric appliances, building materials, and various other fields has been made increasingly higher in strength. For example, in the automotive field, welded joints obtained by spot welding high strength steel sheet has been increasingly used for the purpose of lightening the weight of car bodies so as to improve fuel economy.

In welding steel sheet giving a Zn-based plating, in particular high strength steel sheet, for example as described in PTL 1, sometimes the drop in weldability due to liquid metal embrittlement (LME) cracking becomes a problem. LME cracking is believed to occur due to the surface layer part of steel sheet transforming to austenite at the time of welding, the molten zinc penetrating the grain boundaries causing the steel sheet to become brittle, and further tensile stress acting on the steel sheet at the time of welding.

Note that, PTL 2 discloses, as steel sheet suppressed in LME cracking and improved in weldability, steel sheet having at its surface layer part particle size 20 nm or more Si oxide particles in a 3000 to 6000/$mm^2$ number density present in a suitable particle size distribution.

[CITATION LIST]

[PATENT LITERATURE]

[PTL 1] WO2019/116531
[PTL 2] WO2020/218575

SUMMARY

[TECHNICAL PROBLEM]

To prevent LME cracking at the time of production of welded joints, it is effective to keep the Zn etc. contained in the plating layer from penetrating the steel sheet transformed to austenite. There is room for improvement on this point.

The present invention, in consideration of such a situation, has as its object the provision of a welded joint in which LME cracking is suppressed at the time of production.

[SOLUTION TO PROBLEM]

The inventors engaged in intensive studies on means for solving the above problem. As a result, they discovered that by using an abrasive material to impart strain at the steel sheet before annealing under suitable conditions to render it a suitable surface state and performing high dew point annealing, the steel sheet surface layer is decarburized and further a layer with a low cementite fraction is formed and as a result, it becomes possible to suppress LME.

The present invention is a result of further studies conducted based on the above findings and has as its gist the following:

[1] A welded joint comprising an overlaid plurality of steel sheets and a spot welded part joining the plurality of steel sheets, wherein the spot welded part comprises a nugget, an indentation part indented by an electrode, and a weld shoulder part of a peripheral edge part of the indentation part; at least the one steel sheet arranged at an outermost side among the plurality of steel sheets is a high strength steel sheet with a tensile strength of 780 MPa or more; a chemical composition of the high strength steel sheet comprises, by mass%, C: 0.08 to 0.40%, Si: 0.4 to 2.0%, Mn: 0.1 to 5.0%, sol. Al: 0 to 2.0%, P: 0.0300% or less, S: 0.0300% or less, N: 0.0100% or less, B: 0 to 0.0100%, Ti: 0 to 0.1500%, Nb: 0 to 0.150%, V: 0 to 0.150%, Cr: 0 to 2.00%, Ni: 0 to 2.00%, Cu: 0 to 2.0000%, Mo: 0 to 1.00%, W: 0 to 1.000%, Ca: 0 to 0.1000%, Mg: 0 to 0.100%, Zr: 0 to 0.100%, Hf: 0 to 0.100%, REM: 0 to 0.1000% and a balance of Fe and impurities; in a region separated by 5 mm or more from an outside end of the nugget, in a depth direction from the surface of the high strength steel sheet, a depth with a C concentration measured by GDS of 0.01% or less is 3 $\mu$m or more and a roughness of a surface of the high strength steel sheet is an arithmetic average roughness Ra of 3.0 $\mu$m or less; and in a range of 0 to 100 $\mu$m from an outside end of the weld shoulder part, in a depth direction from the surface of the high strength steel sheet, a thickness of a layer with an area ratio of cementite of 10% or less is 5 $\mu$m or more.

[2] The welded joint according to the above [1], wherein part or all of the surface of one or more steel sheets among the plurality of steel sheets is provided with a plating layer containing Zn.

[3] The welded joint according to the above [1] or [2], wherein a total value of contents of Si and sol. Al is less than 1.8%.

[4] The welded joint according to any of the above [1] to [3], wherein a depth with a C concentration measured by GDS of 0.01% or less is 5 $\mu$m or more.

[5] The welded joint according to any one of the above [1] to [3], wherein a depth with a C concentration measured by GDS of 0.01% or less is 7 $\mu$m or more.

The present invention includes the following aspects:

(1) A welded joint comprising an overlaid plurality of steel sheets and a spot welded part joining the plurality of steel sheets, in which welded joint, the spot welded part has an indentation part indented by an electrode and a weld shoulder part, at least one steel sheet among the plurality of steel sheets is a plated steel sheet comprised of a base steel sheet and a plating layer containing Zn, the plating layer formed on at least a surface corresponding to an overlaid surface of the plurality of steel sheets, the plated steel sheet having a tensile strength of 780 MPa or more, the base steel sheet having a chemical composition containing, by mass%, C: 0.08 to 0.40%, Si: 0.4 to 2.0%, Mn: 0.1 to 5.0%, sol. Al: 0 to 2.0%, P: 0.0300% or less, S: 0.0300% or less, N: 0.0100% or less, B: 0 to 0.0100%, Ti: 0 to 0.1500%, Nb: 0 to 0.150%, V: 0 to 0.150%, Cr: 0 to 2.0%, Ni: 0 to 2.00%, Cu: 0 to 2.0000%, Mo: 0 to 1.00%, W: 0 to 1.00%, Ca: 0 to 0.1000%, Mg: 0 to 0.100%, Zr: 0 to 0.100%, Hf: 0 to 0.100%, and REM: 0 to 0.1000% and having a balance of Fe and impurities, in a non-heat affected zone at a distance separated by 5 mm or more from an outside end of the spot welded part, in a depth direction of the base steel sheet starting from an interface of the plating layer and the base steel sheet, a depth with a C concentration measured by GDS of 0.01% or less is 3 $\mu$m or more and a roughness of an interface of the plating layer and the base steel sheet is an Ra of 3.0 $\mu$m or less, and in a heat affected zone at a distance of 0 to 100 $\mu$m from the weld shoulder part, in a depth direction of the base steel sheet starting from an interface of the plating layer and the base steel sheet, a thickness of a layer with an area ratio of cementite of 10% or less is 5 $\mu$m or more.

(2) The welded joint according to the above (1), wherein a total value of contents of Si and sol. Al is less than 1.8%.

(3) The welded joint according to any of the above (1) or (2), wherein in a depth direction of the base steel sheet starting from an interface of the plating layer and the base steel sheet, a depth with a C concentration measured by GDS of 0.01% or less is 5 $\mu$m or more.

(4) The welded joint according to any of the above (1) or (2), wherein in a depth direction of the base steel sheet starting from an interface of the plating layer and the base steel sheet, a depth with a C concentration measured by GDS of 0.01% or less is 7 $\mu$m or more.

[ADVANTAGEOUS EFFECTS OF THE INVENTION]

According to the present invention, it is possible to obtain a welded joint suppressed in LME cracking at the time of production.

BRIEF DESCRIPTION OF DRAWINGS

FIG. 1 is a view for explaining the welded joint of the present invention.
FIG. 2 is a view showing a layer formed in the vicinity of a welded part of the welded joint of the present invention.
FIG. 3 is a view explaining evaluation of the LME resistance in the examples.

DESCRIPTION OF EMBODIMENTS

Below, the present invention will be explained. The present invention is not limited to the following embodiments. First, in the welded joint of the present invention, the configuration for improving the LME resistance at the time of production of the welded joint will be explained in outline.

If spot welding plated steel sheet at the time of production of a welded joint, the plating melts and the surface layer part of the steel sheet is heated whereby the steel sheet surface transforms to austenite. At that time, the molten plating penetrates the steel sheet structure along the grain boundaries of the austenite and the crystal grain boundaries become brittle. For this reason, if stress is applied to the steel sheet at the time of welding, LME cracking easily occurs at the crystal grain boundaries. In particular, if tensile stress is applied to the steel sheet at the time of welding, LME cracking is believed to easily occur. The welded joint of the present invention is improved in LME resistance at the time of production of the welded joint by the structure formed at the surface layer of the steel sheet forming the welded joint. Note that, in this Description, the "surface layer of the steel sheet" means the range from the surface of the steel sheet to a depth of 100 $\mu$m.

If the C element is contained in the steel sheet surface layer, LME cracking easily occurs, therefore keeping the C concentration of the steel sheet surface layer low is effective for preventing LME cracking. Normally, if heating steel sheet like with annealing, external oxidation occurs and oxides (scale) are formed at the steel sheet surface, therefore decarburization becomes difficult. For this reason, the C concentration at the steel sheet surface layer is difficult to reduce. On the other hand, at the steel sheet forming the welded joint of the present invention, in the depth direction from the steel sheet surface, the region at which the C concentration measured by GDS is 0.01% or less is 3 $\mu$m or more from the steel sheet surface. This means that the concentration of C at the surface layer of the steel sheet is low.

However, even if the C concentration at the steel sheet surface layer is low, if C remains as carbides (cementite), the molten plating penetrates the inside of the steel sheet along the grain boundaries of cementite and is liable to become the starting point of LME cracking. For this reason, if the C at the steel sheet surface layer is present as cementite, it is believed that this is liable to lead to a drop in the LME resistance. Therefore, in the steel sheet forming a welded joint of the present invention, the thickness of the layer with an area ratio of cementite of 10% or less in the depth direction from the steel sheet surface is 5 $\mu$m or more. That is, the steel sheet forming a welded joint of the present invention improves the LME resistance at the time of production of the welded joint by controlling the form of the C at the surface layer.

In this way, the fact that to lower the area ratio of the cementite at the surface layer, control of the dew point at the time of annealing in addition to imparting strong strain to the surface layer of the steel sheet for annealing is important was discovered by the inventors. In the present invention, by imparting strong strain to the surface layer of the steel sheet without increasing surface roughness, it is possible to promote diffusion of oxygen to the inside of the steel sheet and lower the C concentration at the surface layer of the steel sheet. Further, the fact that by making the C concentration of the surface layer of the steel sheet and the area ratio of the cementite as explained, structures with low area ratio of cementite are maintained even at the time of production of a welded joint and the LME resistance at the time of production of the welded joint can be improved was discovered by the inventors and led to the completion of the present invention.

Below, the present invention will be explained in detail.

<<Welded Joint>>

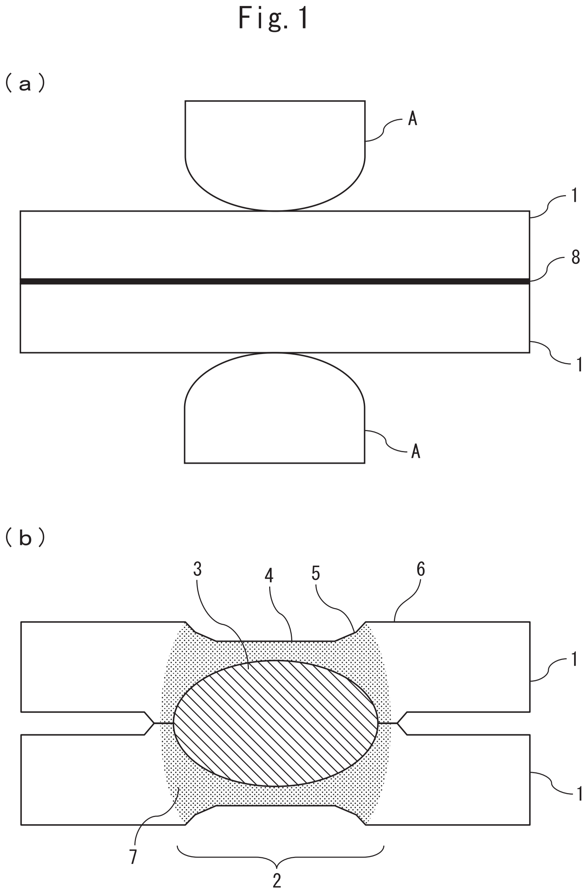

First, referring to FIG. 1, a welded joint of the present invention will be explained. The welded joint of the present invention, as shown in FIG. 1(a), is produced by spot welding a plurality of (in FIG. 1, two) steel sheets 1 using welding electrodes A. In the present embodiment, the plurality of (in FIG. 1, two) steel sheets 1 are spot welded in an overlaid state. These plurality of steel sheets, if viewed from a direction vertical to the surfaces, are spot welded at a region where the steel sheets are overlaid. In the present embodiment, the surfaces where the steel sheets are overlaid and contact each other are made the overlaid surfaces 8. In this case, if only one of the overlaid steel sheets is a plated steel sheet, the plated surface of the plated steel sheet and the surface of the other nonplated steel surface are deemed the "overlaid surfaces". Further, if both of the overlaid steel surfaces are plated steel sheets, the surfaces where the plated surfaces of the respective steel sheets contact are deemed the "overlaid surfaces". If both of the overlaid steel sheets are nonplated steel sheets on which plating is not formed, the surfaces where the steel sheet surfaces are overlaid are deemed the "overlaid surfaces".

FIG. 1(b) shows a welded joint comprised of two steel sheets welded by spot welding. The welded joint of the present invention is provided with an overlaid plurality of steel sheets 1 and a spot welded part 2 joining the plurality of steel sheets. The spot welded part 2 has a nugget 3, indentation parts 4 indented by the welding electrodes, and weld shoulder parts 5. The weld shoulder parts 5 mean the slanted parts of the valleys of the indentation parts 4. The weld shoulder outside parts 6 are the parts at the outside of the weld shoulder parts 5. Around the spot welded part 2, a heat affected zone 7 of a part of the steel sheet not melted where the welding heat causes the structure, metallurgical properties, mechanical properties, etc. to change is formed. The part other than the heat affected zone 7 is the "non-heat affected zone". A part separated by 5 mm or more from an outside end of the nugget of the spot welded part 2 can be judged to be a non-heat affected zone.

The plurality of steel sheets forming the welded joint of the present invention, as explained below, can include both a plated steel sheet and a non-plated steel sheet which is not plated. Further, at least one of the plurality of steel sheets is a high strength steel sheet with a tensile strength of 780 MPa or more. Among the plurality of steel sheets, if at least one is high strength steel sheet with a tensile strength of 780 MPa or more, the other steel sheets may be steel sheets with a tensile strength of less than 780 MPa or steel sheets with a tensile strength of 780 MPa or more.

In the following explanation, "high strength steel sheet" indicates steel sheet forming the welded joint of the present invention in which the tensile strength is 780 MPa or more.

Here, LME cracking as explained above occurs when there is molten zinc plating present on the surface of the high strength steel sheet at the time of welding. For example, if considering a welded joint comprised of two steel sheets, if at least one of the two steel sheets is high strength and there is zinc plating present at the overlaid surfaces, there is a possibility of LME cracking occurring at a position corresponding to the overlaid surfaces. In addition, for example, even in the case where one sheet is relatively low strength galvanized steel sheet and the other is nonplated high strength steel sheet, there is molten zinc plating present at the overlaid surfaces of the steel sheets at the time of welding. For this reason, the molten zinc plating may also contact the nonplated high strength steel sheet, therefore there is a possibility of LME cracking occurring. The welded joint of the present invention includes both cases where the plurality of steel sheets forming the welded joint are plated steel sheets and nonplated steel sheets. For example, a welded joint where one sheet is comprised of a relatively low strength galvanized steel sheet and the other is comprised of a high strength nonplated steel sheet is also included in the welded joint of the present invention. In addition, a welded joint where one sheet is comprised of a relatively low strength nonplated steel sheet and the other is comprised of a high strength galvanized steel sheet, a welded joint where one sheet is comprised of a relatively low strength galvanized steel sheet and the other is comprised of a high strength galvanized steel sheet, a welded joint where both sheets are comprised of high strength galvanized steel sheets, etc. are also included in the welded joint of the present invention.

If at least one steel sheet among a plurality of steel sheets forming a welded joint is high strength steel sheet and that high strength steel sheet is arranged at the outermost side among the plurality of steel sheets forming the welded joint (position which a welding electrode can directly contact at the time of spot welding), there is a possibility of LME cracking occurring at the time of spot welding even if all of the steel sheets forming the welded joint are nonplated steel sheets. Specifically, when spot welding another steel sheet provided with zinc plating at the outermost layer in advance, sometimes the molten zinc plating will deposit on the welding electrodes. If using such welding electrodes, the plating deposited at the welding electrodes at the time of spot welding melts and sometimes that plating is deposited on the high strength steel sheet which is not plated. Due to this, the melted zinc penetrates the surface of the high strength steel sheet and LME cracking sometimes occurs. The welded joint of the present invention may also suppress such LME cracking at the time of production of the welded joint even if the steel sheets forming the welded joint are all nonplated steel sheets.

[Tensile Strength of High Strength Steel Sheet]

The present invention suppresses the LME at the of production of a welded joint which occurs in high strength steel sheet. Among the steel sheets forming the welded joint according to the present invention, at least one is high strength steel sheet. Specifically, it has a 780 MPa or more tensile strength. The upper limit of the tensile strength is not particularly prescribed, but from the viewpoint of securing toughness, it may for example be 2000 MPa or less. The tensile strength may be measured by taking a JIS No. 5 tensile test piece having a direction perpendicular to the rolling direction as a long direction and performing a test based on JIS Z2241:2011. The tensile strength may be 880 MPa or more, 980 MPa or more, 1080 MPa or more, or 1180 MPa or more. The tensile strength may also be 1900 MPa or less or 1800 MPa or less.

Note that, when a test piece for measurement of the tensile strength cannot be taken from the steel sheet forming a welded joint, alternatively, the hardness (Vickers hardness) of the steel sheet at a non-heat affected zone at a distance of 5 mm or more from an outside end of the spot welded part can be measured and the value of the tensile strength may be estimated from the following correlation formula (Correlation Between Static Strength Parameters, Fumihiko Hasegawa, Junichi Arai, Tsuneshichi Tanaka,"Materials", Vol. 39, No. 442, P. 859 to 863). Here, a "heat affected zone" is a not melted part of the steel sheet at which welding heat causes a change in the structure, metallurgical properties, mechanical properties, etc. while a "non-heat affected zone" is a part other than a heat affected zone. A portion 5 mm or more separated from the outside end of the spot welded part may be judged to be a non-heat affected zone.

$$Hv=0.301\times TS+5.701$$

(where, Hv is the Vickers hardness and TS is the tensile strength (unit: MPa))

That is, if the hardness if 240 Hv or so or more, the tensile strength may be deemed 780 MPa or more.

The hardness of the steel sheet is measured at a position of 1/2 depth at a non-heat affected zone of the steel sheet forming the welded joint. The hardness is measured based on JIS Z 2244: 2009. The measurement load is made 200 gf. The hardness of the high strength steel sheet at the non-heat affected zone at a distance separated by 5 mm or more from an outside end of the spot welded part may also be 245 Hv or more, 250 Hv or more, 260 Hv or more, 270 Hv or more, 300 Hv or more, or 340 Hv or more.

[Chemical Composition of High Strength Steel Sheet]

Next, the chemical composition of the high strength steel sheet forming the welded joint will be explained. Below, the "%" relating to the chemical composition shall mean "mass%". Further, in the numerical ranges in the chemical constituents, numerical ranges expressed using "to" mean ranges including the numerical values described before and after the "to" as lower limit values and upper limit values.

(C: 0.08 to 0.40%)

C (carbon) is an element securing the strength of steel. To obtain the 780 MPa or more tensile strength covered by the present invention, considering the balance with the weldability, the content of C is 0.08 to 0.40%. The content of C may also be 0.10% or more, 0.12% or more, or 0.15% or more. The content of C may also be 0.40% or less, 0.35% or less, or 0.30% or less.

(Si: 0.4 to 2.0%)

Si (silicon) is an element promoting ferrite stabilization and decarburization. By Si being contained, due to the later explained pretreatment and heat treatment, decarburization at the surface layer part proceeds and ferrite at the surface layer part stabilizes, whereby the LME resistance is improved. To obtain this effect, the content of Si is 0.4 to 2.0%. The content of Si may also be 0.5% or more, 0.6% or more, 0.7% or more, or 0.8% or more. The content of Si may also be 1.8% or less, 1.7% or less, 1.6% or less, or 1.5% or less.

(Sol. Al: 0 to 2.0%)

Al (aluminum) is an element forming a solid solution in the steel and thereby, like Si, promoting ferrite stabilization and decarburization. "sol. Al" means acid soluble Al not forming $Al_2 O_3$ or other oxides and able to dissolve in acid and is found as the Al measured in the process of analysis of Al when excluding insoluble residue on the filter paper. In the high strength steel sheet forming the welded joint of the present invention, the role of Al can also be obtained by inclusion of Si, therefore Al is not essential. The lower limit of the content of sol. Al is 0%. From the viewpoint of the LME resistance, therefore the content of sol. Al is 2.0% or less. The content of sol. Al may also be 0.1% or more, 0.2% or more, or 0.3% or more. The content of sol. Al may also be 1.5% or less, 1.2% or less, or 1.0% or less.

Note that, Si and Al are also elements causing a drop in the LME resistance, therefore the total value of contents of Si and sol. Al is preferably less than 1.8%. The total of the contents of Si and sol. Al may also be less than 1.7% or less than 1.6%.

(Mn: 0.1 to 5.0%)

Mn (manganese) is an element forming hard structures and therefore is effective for improving the strength of the steel. Considering the balance of the strength of the steel and the drop in formability due to Mn segregation, the content of Mn is 0.1 to 5.0%. The content of Mn may also be 0.5% or more, 1.0% or more, or 1.5% or more. The content of Mn may also be 4.5% or less, 4.0% or less, or 3.5% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0%. From the viewpoint of the dephosphorization costs, the content of P may also be more than 0%, 0.0001% or more, or 0.0005% or more.

(S: 0.0300% or Less)

S (sulfur) is an impurity generally contained in steel. If the content of S is more than 0.0300%, the weldability is liable to fall and, further, the amount of precipitation of MnS is liable to increase and the bendability and other formability are liable to fall. Therefore, the content of S is 0.0300% or less. The content of S may also be 0.0100% or less, 0.0050% or less, or 0.0020% or less. S is preferably not contained. The lower limit of the content of S is 0%. From the viewpoint of the desulfurization costs, the content of S may also be more than 0%, 0.0001% or more, or 0.0005% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0%. From the viewpoint of production costs, the content of N may also be more than 0%, 0.0001% or more, 0.0005% or more, or 0.0010% or more.

(B: 0 to 0.0100%)

B (boron) is an element raising the hardenability and contributing to improvement of the strength and segregating at the grain boundaries to strengthen the grain boundaries and improve toughness, therefore may be included in accordance with need. It is not an essential element, therefore the lower limit of the content of B is 0%. The effect is obtained even with inclusion in a trace amount. The content of B if included is preferably 0.0001% or more. The content of B may also be 0.0002% or more or 0.0003% or more. On the other hand, from the viewpoint of securing sufficient toughness, the content of B is 0.0100% or less. The content of B may also be 0.0090% or less, 0.0080% or less, 0.0060% or less, 0.0040% or less, 0.0030% or less, or 0.0020% or less.

(Ti: 0 to 0.1500%)

Ti (titanium) is an element precipitating as TiC during cooling of steel and contributing to improvement of strength, therefore may be included in accordance with need. It is not an essential element, therefore the lower limit of the content of Ti is 0%. The effect is obtained even with inclusion in a trace amount. The content of Ti if included is preferably 0.0001 % or more. The content of Ti may also be 0.0002% or more or 0.0003% or more. On the other hand, if excessively contained, coarse TiN is liable to be formed and the toughness is liable to be reduced, therefore the content of Ti is 0.1500% or less. The content of Ti may also be 0.1350% or less, 0.1200% or less, 0.0900% or less, 0.0600% or less, 0.0450% or less, 0.0300% or less, 0.0150% or less, 0.0050% or less, 0.0030% or less, or 0.0020% or less.

(Nb: 0 to 0.150%)

Nb (niobium) is an element contributing to improvement of strength through improvement of hardenability therefore may be included in accordance with need. It is not an essential element, therefore the lower limit of the content of Nb is 0%. The effect is obtained even with inclusion in a trace amount. The content of Nb if included is preferably 0.001% or more. The content of Nb may also be 0.002% or more, 0.004% or more, 0.006% or more, or 0.007% or more. On the other hand, from the viewpoint of securing sufficient toughness, the content of Nb is 0.150% or less. The content of Nb may also be 0.135% or less, 0.120% or less, 0.095% or less, 0.065% or less, 0.050% or less, 0.030% or less, or 0.020% or less.

(V: 0 to 0.150%)

V (vanadium) is an element contributing to improvement of strength through improvement of hardenability therefore may be included in accordance with need. It is not an essential element, therefore the lower limit of the content of V is 0%. The effect is obtained even with inclusion in a trace amount. The content of V if included is preferably 0.001% or more. The content of V may also be 0.003% or more, 0.005% or more, or 0.006% or more. On the other hand, from the viewpoint of securing sufficient toughness, the content of V is 0.150% or less. The content of V may also be 0.135% or less, 0.120% or less, 0.095% or less, 0.065% or less, 0.050% or less, 0.045% or less, 0.025% or less, or 0.020% or less.

(Cr: 0 to 2.00%)

Cr (chromium) is effective for raising the hardenability to raise the strength of the steel, therefore may be included in accordance with need. It is not an essential element, therefore the lower limit of the content of Cr is 0%. The effect is obtained even with inclusion in a trace amount. The content of Cr if included is preferably 0.001% or more. The content of Cr may also be 0.01% or more, 0.02% or more, 0.04% or more, 0.06% or more, or 0.07% or more. On the other hand, if excessively contained, Cr carbides are formed in large amounts and conversely the hardenability is liable to be impaired, therefore the content of Cr is 2.00% or less. The content of Cr may also be 1.80% or less, 1.60% or less, 1.25% or less, 0.85% or less, 0.65% or less, 0.50% or less, 0.30% or less, or 0.20% or less.

(Ni: 0 to 2.00%)

Ni (nickel) is effective for raising the hardenability to raise the strength of the steel, therefore may be included in accordance with need. It is not an essential element, therefore the lower limit of the content of Ni is 0%. The effect is obtained even with inclusion in a trace amount. The content of Ni if included is preferably 0.001% or more. The content of Ni may also be 0.01% or more, 0.03% or more, 0.04% or more, or 0.05% or more. On the other hand, excessive addition of Ni causes a rise in cost, therefore the content of Ni is 2.00% or less. The content of Ni may also be 1.80% or less, 1.60% or less, 1.25% or less, 0.85% or less, 0.65% or less, 0.40% or less, 0.25% or less, or 0.15% or less.

(Cu: 0 to 2.0000%)

Cu (copper) is effective for raising the hardenability to raise the strength of the steel, therefore may be included in accordance with need. It is not an essential element, therefore the lower limit of the content of Cu is 0%. The effect is obtained even with inclusion in a trace amount. The content of Cu if included is preferably 0.0001% or more. The content of Cu may also be 0.0002% or more or 0.0004% or more. On the other hand, from the viewpoint of suppressing a drop of toughness or cracking of a slab after casting or a drop in weldability, the content of Cu is 2.0000% or less. The content of Cu may also be 1.8000% or less, 1.6000% or less, 1.2000% or less, 0.8000% or less, 0.6000% or less, 0.4000% or less, 0.2000% or less, 0.1000% or less, 0.0070% or less, 0.0050% or less, 0.0035% or less, 0.0020% or less, or 0.0015% or less.

(Mo: 0 to 1.00%)

Mo (molybdenum) is effective for raising the hardenability to raise the strength of the steel, therefore may be included in accordance with need. It is not an essential element, therefore the lower limit of the content of Mo is 0%. The effect is obtained even with inclusion in a trace amount. The content of Mo if included is preferably 0.001% or more. The content of Mo may also be 0.01% or more, 0.03% or more, 0.05% or more, or 0.06% or more. On the other hand, from the viewpoint of suppressing a drop in toughness, the content of Mo is 1.00% or less. The content of Mo may also be 0.90% or less, 0.80% or less, 0.65% or less, 0.45% or less, 0.35% or less, 0.30% or less, or 0.20% or less.

(W: 0 to 1.000%)

W (tungsten) is effective for raising the hardenability to raise the strength of the steel, therefore may be included in accordance with need. It is not an essential element, therefore the lower limit of the content of W is 0%. The effect is obtained even with inclusion in a trace amount. The content of W if included is preferably 0.001% or more. The content of W may also be 0.002% or more or 0.003% or more. On the other hand, from the viewpoint of suppression of a drop in toughness, the content of W is 1.000% or less. The content of W may also be 0.900% or less, 0.800% or less, 0.600% or less, 0.400% or less, 0.300% or less, 0.200% or less, 0.100% or less, 0.050% or less, 0.025% or less, 0.015% or less, or 0.010% or less.

(Ca: 0 to 0.1000%)

Ca (calcium) is an element contributing to control of inclusions, in particular the fine dispersion of inclusions and having the action of raising the toughness, therefore may be included in accordance with need. It is not an essential element, therefore the lower limit of the content of Ca is 0%. The effect is obtained even with inclusion in a trace amount. The content of Ca if included is preferably 0.0001% or more. The content of Ca may also be 0.0002% or more or 0.0003% or more. On the other hand, if excessively contained, deterioration of the surface properties sometimes surfaces, therefore the content of Ca is 0.1000% or less. The content of Ca may also be 0.0900% or less, 0.0800% or less, 0.0600% or less, 0.0400% or less, 0.0300% or less, 0.0200% or less, 0.0100% or less, 0.0050% or less, 0.0025% or less, 0.0015% or less, or 0.0010% or less.

(Mg: 0 to 0.100%)

Mg (magnesium) is an element having the action of contributing to control of inclusions, in particular fine dispersion of the inclusions and raising the toughness, therefore may be included in accordance with need. It is not an essential element, therefore the lower limit of the content of Mg is 0%. The effect is obtained even with inclusion in a trace amount, but the content of Mg if included is preferably 0.0001% or more. The content of Mg may also be 0.0002% or more, 0.0003% or more, or 0.0005% or more. On the other hand, if excessively contained, deterioration of the surface properties sometimes surfaces, therefore the content of Mg is 0.100% or less. The content of Mg may also be 0.090% or less, 0.080% or less, 0.060% or less, 0.040% or less, 0.030% or less, 0.020% or less, 0.010% or less, 0.005% or less, 0.003% or less, or 0.002% or less.

(Zr: 0 to 0.100%)

Zr (zirconium) is an element having the action of contributing to control of inclusions, in particular fine dispersion of the inclusions and raising the toughness, therefore may be included in accordance with need. It is not an essential element, therefore the lower limit of the content of Zr is 0%. The effect is obtained even with inclusion in a trace amount. The content of Zr if included is preferably 0.001 % or more. The content of Zr may also be 0.003% or more, 0.006% or more, 0.009% or more, or 0.010% or more. On the other hand, if excessively contained, deterioration of the surface properties sometimes surfaces, therefore the content of Zr is 0.100% or less. The content of Zr may also be 0.090% or less, 0.085% or less, 0.065% or less, 0.050% or less, 0.040% or less, or 0.030% or less.

(Hf: 0 to 0.100%)

Hf (hafnium) is an element having the action of contributing to control of inclusions, in particular fine dispersion of the inclusions and raising the toughness, therefore may be included in accordance with need. It is not an essential element, therefore the lower limit of the content of Hf is 0%. The effect is obtained even with inclusion in a trace amount. The content of Hf if included is preferably 0.0001 % or more. The content of Hf may also be 0.0002% or more, 0.0003% or more, or 0.0005% or more. On the other hand, if excessively contained, deterioration of the surface properties sometimes surfaces, therefore the content of Hf is 0.100% or less. The content of Hf may also be 0.090% or less, 0.080% or less, 0.060% or less, 0.040% or less, 0.030% or less, 0.020% or less, 0.010% or less, 0.005% or less, 0.003% or less, or 0.002% or less.

(REM: 0 to 0.1000%)

An REM (rare earth metal) is an element having the action of contributing to control of inclusions, in particular fine dispersion of the inclusions and raising the toughness, therefore may be included in accordance with need. It is not an essential element, therefore the lower limit of the content of an REM is 0%. The effect is obtained even with inclusion in a trace amount. The content of an REM if included is preferably 0.0001% or more. The content of an REM may also be 0.0003% or more, 0.0004% or more, or 0.0005% or more. On the other hand, if excessively contained, deterioration of the surface properties sometimes surfaces, therefore the content of an REM is 0.1000% or less. The content of an REM may also be 0.0900% or less, 0.0800% or less, 0.0600% or less, 0.0400% or less, 0.0300% or less, 0.0200% or less, 0.0100% or less, 0.0040% or less, 0.0025% or less, or 0.0015% or less. Note that, REM is an abbreviation of "rare earth metal" and means elements belonging to the lanthanides. An REM is usually added as a misch metal.

In the steel sheet forming the welded joint according to the present invention, the balance besides the above chemical composition is comprised of Fe and impurities. Here, the "impurities" are constituents entering due to the ore, scrap, or other raw materials and other various factors in the production process when industrially producing steel sheet and not having a detrimental effect on the LME resistance at the time of production of the welded joint according to the present invention.

The chemical composition of the steel sheet may be analyzed using an elemental analysis method known to persons skilled in the art. For example, it is analyzed by inductively coupled plasma mass spectrometry (ICP-MS method). However, C and S may be measured using the combustion-infrared absorption method, while N can be measured using the inert gas melting-thermal conductivity method. These analyses may be performed on a sample taken from the steel sheet by a method based on JIS G0417: 1999.

Next, the structure of the surroundings of the welded part of the welded joint will be explained. First, the structure of the high strength steel sheet of the non-heat affected zone will be explained.

[C Concentration]

In the welded joint of the present invention, at a non-heat affected zone a distance of 5 mm or more away from an outside end of a spot weld part, in the depth direction from the surface of the high strength steel sheet, the depth where the C concentration measured by GDS (glow discharge spectrometry) is 0.01% or less is 3 $\mu$m or more.

The sensitivity to LME becomes lower if the C concentration becomes lower, therefore if the C concentration of the surface layer is low, the LME resistance is improved. Further, C is an element stabilizing austenite, therefore by this being low, the layer with a low LME sensitivity, explained later, stabilizes.

Such a surface layer structure can be obtained by making the chemical composition of the steel sheet the one explained above and performing the later explained pretreatment and heat treatment.

If the depth at which the C concentration is 0.01% or less is 3 $\mu$m or more, the effect of improvement of the LME resistance is obtained, therefore the upper limit of the depth is not limited. The depth at which the C concentration is 0.01% or less may also be 50 $\mu$m or less, 40 $\mu$m or less, or 30 $\mu$m or less. The depth at which the C concentration is 0.01% or less may also be 5 $\mu$m or more, 7 $\mu$m or more, 10 $\mu$m or more, 15 $\mu$m or more, or 20 $\mu$m or more.

GDS measurement is performed five times in the sheet thickness direction and the average value of these is made the C concentration. The measurement conditions are made the following.

Apparatus: high frequency glow discharge optical emission spectrometry (made by LECO Japan Corporation, Model No. "GDS850A"
Ar gas pressure: 0.3 MPa
Anode size: 4 mmφ
RF output: 30W
Measurement time: 200 to 1500 seconds

The starting point of "depth" in GDS measurement is the surface of the high strength steel sheet or, in the case where the high strength steel sheet is provided with the later explained plating layer, is the interface of the steel sheet and plating layer. The interface of the steel sheet and the plating layer is made the position where the concentration of Fe measured by GDS measurement becomes 93% of the concentration of Fe at the depth of 150 μm.

[Surface Roughness]

In the welded joint of the present invention, at a non-heat affected zone at a distance of 5 mm or more separated from an outside end of the spot welded part, the roughness of the surface of the high strength steel sheet or, if the high strength steel sheet is provided with a later explained plating layer, the roughness of the interface of the steel sheet and the plating layer is an arithmetic average roughness Ra defined by JIS B0601: 2013 of 3.0 μm or less. If the roughness becomes greater, stress concentration causes cracking to easily occur. The roughness of the interface may be an Ra of 2.5 μm or less or 2.0 μm or less. The roughness of the interface of the steel sheet and the plating layer may be the surface roughness of the steel sheet measured after removing the plating. The plating may be removed by dissolving the plating layer in an acid solution to which an inhibitor suppressing corrosion of the steel sheet is added.
Next, the structure of the high strength steel sheet of the heat affected zone will be explained.

[Low Cementite Layer]

In the welded joint of the present invention, in the heat affected zone at a distance of 0 to 100 μm from the weld shoulder part, the thickness of the layer with an area ratio of cementite of 10% or less (below, referred to as the "low cementite layer") in the depth direction from the surface of the high strength steel sheet is 5 μm or more.

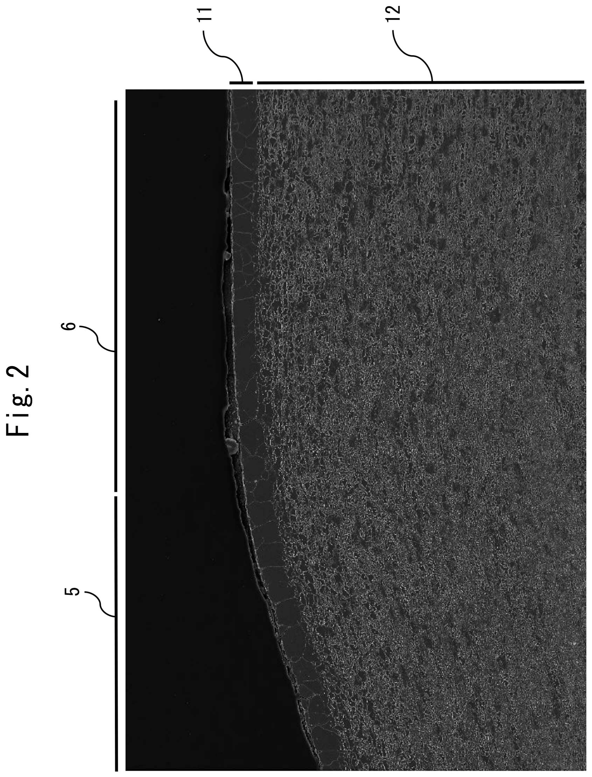

FIG. 2 shows one example of a structural photograph of the vicinity of the surface layer of a high strength steel sheet forming a welded joint of the present invention. FIG. 2 is a structural photograph by an SEM capturing the vicinity of the surface layer of the high strength steel sheet forming a welded joint by a power of 1000X. FIG. 2 is a cross-section parallel to the thickness direction of the steel sheet. The top side of the figure is the front surface of the steel sheet. FIG. 2 shows the vicinity of the weld shoulder part 5 of the slanted part of an indentation formed by a welding electrode and the weld shoulder outside part 6 of the part at the outside of the weld shoulder part 5. The steel sheet surface layer has a low cementite layer 11 comprised of a layer which is low in C concentration, is mainly comprised of ferrite, and has an area ratio of cementite of 10% or less. At the inside of the steel sheet from the low cementite layer 11 (bottom side of drawing), there are hard structures 12 including a relatively large amount of cementite. The ferrite and the cementite can be judged by the difference in brightness at the SEM image. When classifying the steel sheet part of FIG. 2 into parts with a relatively high brightness (bright parts) and parts with a relatively low brightness (dark parts), the parts with relatively high brightness can be judged to be cementite. The parts with relatively low brightness can be judged to be ferrite.
Cementite easily segregates at the grain boundaries, therefore if cementite increases, the molten plating penetrates the grain boundaries and LME easily occurs. Therefore, by making the low cementite layer thickly present, even if the plating melts, LME hardly occurs and the LME resistance can be improved. Such a surface layer structure can be obtained by making the chemical composition of the steel sheet one as explained above and performing the later explained pretreatment and heat treatment.
If the thickness of the low cementite layer is 5 μm or more, the effect of improvement of the LME resistance is obtained, therefore the upper limit of the thickness is not particularly prescribed. The thickness of the low cementite layer may also be 50 μm or less, 40 μm or less, or 30 μm or less. The thickness of the low cementite layer may be 10 μm or more or 20 μm or more.
The structure other than the cementite of the low cementite layer is not limited. For example, it may be made one or more of any of martensite, bainite, and ferrite. Ferrite is low in LME sensitivity, so being a structure mainly comprised of ferrite is preferable from the viewpoint of the improvement of the LME resistance.
The thickness of the low cementite layer is found by etching by Nital the C-cross-section of the steel sheet (sheet thickness cross-section parallel to rolling direction (L-direction)) and examining a 50 μm×50 μm field containing the surface layer of the steel sheet at a power of 1000X. From the state of the structure on the SEM image obtained by examination under an SEM, it is possible to differentiate between the martensite, bainite, and other hard structures containing relatively large amounts of cementite from ferrite. The thickness of the low cementite layer is measured in a 500 μm measurement range in the L-direction. Five measurement ranges are set at 1000 μm intervals in the L-direction. In the five measurement ranges, the average value of the thicknesses of the low cementite layers in the sheet thickness direction is found. Here, the "area ratio of cementite" means the area ratio found by examining the C-cross-section. If examining locally the L-cross-section (sheet thickness cross-section perpendicular to rolling direction) in the middle of the thickness direction, even if there is a location with a cross-section of the cementite of more than 10%, there is no problem if the area ratio of the cementite is 10% or less in the C-cross-section at depth down to 5 $\mu$m.

If the steel sheet has a plating layer explained later, the starting point of the thickness of the low cementite layer with a cementite area ratio of 10% or less is the interface of the steel sheet and the plating layer.

[Plating Layer]

Part or all of the surface of one or more steel sheets among the plurality of steel sheets forming the welded joint of the present invention may be provided with a plating layer containing Zn. Note that if a plating layer is provided at a high strength steel sheet, it need not be positioned at the overlaid surfaces. For example, the outermost surface of the overlaid plurality of steel sheets may also be provided with a plating layer. Specifically, if a high strength steel sheet on which a plating layer is provided (below, referred to as the "first steel sheet") and a steel sheet on which a plating layer is not provided (below, referred to as the "second steel sheet") are overlaid, it is sufficient that the first steel sheet be overlaid on the second steel sheet with its plating layer facing upward. In that case, a state where there is no plating layer present at the overlaid surfaces of the first steel sheet and the second steel sheet results. Note that so long as the first steel sheet is a high strength steel sheet, the second steel sheet may or may not be a high strength steel sheet. Either is ok. Further, the steel sheets are not limited to the first steel sheet and the second steel sheet. Three or more steel sheets may be used so that there are two or more overlaid surfaces of a high strength steel sheet and other steel sheets.

Further, in the welded joint of the present invention, the surfaces forming the overlaid surfaces of the first steel sheet and the second stee sheet may be provided with a plating layer face. If the overlaid surfaces have a plating layer present, both of the first steel sheet and second steel sheet may be provided with a plating layer. Either of the first steel sheet and second steel sheet may also be provided with a plating layer. The plating layers are not particularly limited so long as containing Zn. As examples, Zn-0.2%Al, Zn-0.5%Al, Zn-1.5%Al-1.5%Mg, Zn-20%Al-7%Mg, and Zn-30%Al-10% Mg may be mentioned.

Note that cases where the plurality of steel sheets forming a welded joint of the present invention are all not provided with plating layers are also included. For example, when welding a first steel sheet and a second steel sheet neither of which are provided with a plating layer, if a welding electrode with plating deposited on it touches the high strength steel sheet, the zinc of the melted plating constituents may penetrate the surface layer of the high strength steel sheet.

The chemical composition of the plating layer can be determined by dissolving the plating layer in an acid solution to which an inhibitor is added for suppressing corrosion of the steel sheet and measuring the obtained solution by ICP (inductively coupled plasma) emission spectrometry. The acid solution to which the inhibitor is added may for example be a 10 mass% hydrochloric acid solution to which 0.06 mass% of an inhibitor (ibit made by Asahi Chemical Corporation) is added.

The thickness of the plating layer may for example be 3 to 50 $\mu$m. Further, the amount of deposition of the plating layer is not particularly limited, but for example may be 10 to 170 g/m$^2$ per side. In the present invention, the amount of deposition of the plating layer is determined from the change in weight before and after dissolving the plating layer in an acid solution to which an inhibitor for suppressing corrosion of the steel sheet is added and pickling and removal of the plating layer. The thickness of the plating layer may be 5 $\mu$m or more, 10 $\mu$m or more, 15 $\mu$m or more, or 20 $\mu$m or more. The thickness of the plating layer may also be 40 $\mu$m or less or 30 $\mu$m or less. The amount of deposition of the plating layer may be 20 g/m$^2$ or more, 30 g/m$^2$ or more, 40 g/m$^2$ or more, or 50 g/m$^2$ or more per side. The amount of deposition of the plating layer may also be 150 g/m$^2$ or less, 130 g/m$^2$ or less, 120 g/m$^2$ or less, or 100 g/m$^2$ or less per side.

If, among the plurality of steel sheets forming the welded joint of the present invention, at least one of the steel sheets forming the overlaid surfaces is high strength steel sheet and at least one of the other steel sheets forming the overlaid surfaces is a plated steel sheet, the other steel sheet may be high strength steel sheet and may be steel sheet other than high strength steel sheet. That is, among the two steel sheets forming the overlaid surfaces, sometimes both are high strength steel sheets and sometimes only one is a high strength steel sheet. The properties of the steel sheet other than the high strength steel sheet are not limited. The tensile strength of the steel sheet other than the high strength steel sheet may for example be 390 MPa or more, 490 MPa or more, or 590 MPa or more.

In the welded joint of the present invention, if using the high strength steel sheet as the surface-most layer steel sheet, it is also possible to suppress formation of LME cracking at the surface-most layer of the welded joint. LME cracking at the surface-most layer of the welded joint can occur when the steel sheet of the surface-most layer is high strength steel sheet with a high C concentration and has Zn plating at the surface layer side, when molten Zn plating has deposited at the welding electrodes, etc. As LME cracking at the surface-most layer of the welded joint, for example, there is cracking at the indentation parts made by the welding electrodes (cracking right under welding electrodes), cracking at the slanted parts formed at the peripheral edges of the indentation parts (shoulder parts) (cracking of weld shoulder parts), etc.

The thickness of the high strength steel sheet and steel sheet other than the high strength steel sheet forming the welded joint of the present invention is not particularly limited. For example, it may be 0.6 to 3.2 mm. The sheet thickness may also be 0.8 mm or more or 1.0 mm or more. The sheet thickness may also be 3.0 mm or less, 2.6 mm or less, 2.4 mm or less, 2.2 mm or less, 2.0 mm or less, or 1.8 mm or less.

<<Method of Production of Welded Joint>>

Next, the method of production of the welded joint according to the present invention will be explained. First, the method of production of the high strength steel sheet forming the welded joint will be explained.

<Method of Production of High Strength Steel Sheet>

The steel sheet forming the welded joint according to the present invention can, for example, be obtained by a method of production comprising a casting step of casting molten steel adjusted in chemical composition to form a steel slab, a hot rolling step of hot rolling the steel slab to obtain hot rolled steel sheet, a coiling step of coiling the hot rolled steel sheet, a cold rolling step of cold rolling the coiled hot rolled steel sheet to obtain cold rolled steel sheet, a pretreatment step of shot blasting the cold rolled steel sheet, and an annealing step of annealing the pretreated cold rolled steel sheet. Alternatively, after the hot rolling step, it is also possible to not coil up the hot rolled steel sheet but to pickle it and cold roll it as is.

[Casting Step]

The conditions of the casting step are not particularly limited. For example, after smelting by a blast furnace, electric furnace, etc., various secondary refining operations may be performed, then casting may be performed by a method such as usual continuous casting, casting by the ingot method, etc.

[Hot Rolling Step]

The steel slab obtained by casting can be hot rolled to obtain hot rolled steel sheet. The hot rolling step is performed by hot rolling the cast steel slab directly or after cooling once, then reheating. If reheating, the heating temperature of the steel slab may be, for example, 1100 to 1250°C. In the hot rolling step, usually rough rolling and finish rolling are performed. The temperatures and reduction rates of the rolling operations may be suitably changed in accordance with the desired metallostructure and sheet thickness. For example, the end temperature of the finish rolling may be 900 to 1050°C, and the rolling reduction of the finish rolling may be 10 to 50%.

[Coiling Step]

The hot rolled steel sheet can be coiled at a predetermined temperature. The coiling temperature may be suitably changed in accordance with the desired metallostructure etc. and for example may be 500 to 800°C. It is also possible apply predetermined heat treatment to hot rolled steel sheet before coiling or after coiling, then uncoiling. Alternatively, it is also possible to not perform coiling, but pickle the hot rolled steel sheet after the hot rolling step and then perform the later explained cold rolling.

[Cold Rolling Step]

After pickling etc. the hot rolled steel sheet, the hot rolled steel sheet can be cold rolled to obtain cold rolled steel sheet. The reduction rate of the cold rolling may be suitably changed in accordance with the desired metallostructure and sheet thickness. For example, it may be 20 to 80%. After the cold rolling step, for example, the steel sheet may be air cooled to cool it down to room temperature.

[Pretreatment Step]

To obtain the structure of the surface layer of the steel sheet explained above, predetermined pretreatment is performed, then annealing has to be performed.

The pretreatment includes using a spherical abrasive to shot blast the surface of the cold rolled steel sheet. The abrasive which can be used is not particularly limited, but for example it is possible to use steel balls with a center particle size of 40 to 450 $\mu$m, preferably 120 to 420 $\mu$m, more preferably 180 to 350 $\mu$m. For example, TSH30 made by WINOA IKK

# EP 4 650 480 A1

JAPAN may be mentioned. The blasting amount of the shot blasting may be 5 to 400 kg/m$^2$. Due to this, it is possible to introduce strain without increasing the roughness of the surface. By performing such shot blasting, in the later explained annealing step, decarburization is promoted and structure with stable ferrite can be efficiently formed at the surface layer of the steel sheet. Note that, the amount blasted per unit time/unit area on the level of 400 kg/m$^2$ is $4.0\times10^{-4}$ kg/(mm$^2$·min). Note that, the surface roughness of the steel sheet after pretreatment is maintained in the steel sheet and plated steel sheet according to the present invention after the later explained annealing step and plating step (including alloying step).

[Annealing Step]

After the pretreatment, the cold rolled steel sheet is annealed at a high dew point (high dew point annealing). The annealing is performed in a state applying a 1 to 20 MPa tension. If applying tension at the time of annealing, the steel sheet can be more effectively be given strain and decarburization of the surface layer is promoted.

The holding temperature of the annealing step is 750 to 900°C. The holding temperature may be 770 to 870°C. By setting such a range, decarburization is promoted, the C concentration of the surface layer is lowered, and the cementite can be reduced. The speed of temperature rise to the holding temperature is not particularly limited, but may be 1 to 10°C/s.

The holding time at the holding temperature of the annealing step is 40 to 300 seconds. The holding time may also be 50 to 250 seconds. By setting such a range, decarburization is promoted, the C concentration of the surface layer is lowered, and the cementite can be reduced.

The atmosphere of the annealing step is made the dew point-30 to 20°C. The dew point may also be -10 to 5°C. The atmosphere may, for example, be N$_2$ -1 to 10 vol%H$_2$ or N$_2$ -2 to 4 vol%H$_2$ . By making it such a range, decarburization is promoted, the C concentration of the surface layer is lowered, and cementite can be reduced. Further, if the dew point is too high or too low, at the outside part of the steel sheet, a layer including oxides of Si, Mn, Al, etc. is formed and mutual diffusion of the plating constituents and the steel constituents is obstructed and the plateability sometimes becomes insufficient.

Due to the method of production provided with the above-mentioned steps, at the surface layer of the steel sheet, decarburization is promoted and steel sheet reduced in cementite can be obtained.

<Method of Production of Plated Steel Sheet>

The plated steel sheet can be obtained by plating forming a plating layer containing Zn on steel sheet produced in the above way.

The plating may be performed by methods known to persons skilled in the art. The plating may be performed for example by hot dip coating and may be performed by electroplating. Preferably, the plating is performed by hot dip coating. The conditions of the plating may be suitably set considering the chemical composition, thickness, amount of deposition, etc. of the desired plating layer. For example, the sheet may be dipped in a 420 to 480°C hot dip galvanization bath adjusted in chemical composition for 1 to 10 seconds, pulled out after dipping by 20 to 200 mm/s, and wiped by N$_2$ gas to control the amount of plating deposition. After the plating, alloying may be performed to alloy the plating. The alloying may be performed at 500 to 550°C for 10 to 60 seconds.

<Spot Welding Step>

A plurality of the above-mentioned steel sheets may be spot welded to obtain a welded joint. The conditions of the spot welding are not particularly limited. For example, dome radius type tip diameter 8 mm welding electrodes can be used for spot welding by a squeeze force of 4.0kN, energizing time of 0.5 second, and energizing current of 12 kA.

The welded joint according to the present invention is suppressed in LME cracking at the time of production, therefore can be suitably used in automobiles, household electric appliances, building materials, and other broad fields. In particular, they are preferably used in the automobile field.

EXAMPLES

Below, examples will be used to explain the present invention in more detail. The present invention is not limited to these examples.

<Example No. 1>

Molten steel adjusted to the chemical composition described in No. 1 of Table 1 was smelted in a blast furnace and cast by continuous casting to obtain a steel slab. The obtained steel slab was heated to 1200°C and hot rolled with an end temperature of the finish rolling of 950°C and a rolling reduction of the finish rolling of 30% to obtain hot rolled steel sheet.

The obtained hot rolled steel sheet was coiled at a cooling temperature of 650°C, pickled, then cold rolled by a reduction rate of 50% to obtain cold rolled steel sheet. The sheet thickness of the cold rolled steel sheet was made 1.6 mm.

Next, the cold rolled steel sheet was shot blasted using an abrasive of TSH30 made by WINOA IKK JAPAN and a blasting amount of 5 kg/m$^2$.

Before the annealing step, the surface roughness of the steel sheet was measured based on JIS B 0601: 2013. That is, at the surface of the steel sheet, 10 locations were randomly selected. At each location, the surface profile was measured by a contact type surface roughness meter. The surface roughnesses at these locations were arithmetically averaged. The arithmetic average roughness Ra was evaluated in the following way.

Evaluation AA: 2.0 $\mu$m or less
Evaluation A: more than 2.0 $\mu$m and 3.0 $\mu$m or less
Evaluation B: more than 3.0 $\mu$m

After that, the steel sheet was annealed in an oxygen concentration 20 ppm or less furnace in a $N_2$ -4%$H_2$ gas atmosphere by a dew point of 0°C, holding temperature of 800°C, and holding time of 40 seconds. The speed of temperature rise at the time of annealing was made 6.0°C/s up to 500°C and 2.0°C/s from 500°C to the holding temperature. The annealing was performed in a state applying a 5.0 MPa tension.

After the annealing, plating was performed and was further alloyed to obtain a hot dip galvannealed steel sheet. The plating was dipping in a 450°C hot dip galvanization bath (Zn-0.14%Al) for 3 seconds. After dipping, the steel sheet was pulled out at 100 mm/s and wiped by $N_2$ gas to control the amount of plating deposition to 50 g/m$^2$ then alloying was performed at 520°C for 30 seconds.

Two steel sheets produced were overlaid and spot welded using dome radius type tip diameter 8 mm welding electrodes by a weld angle of 2°, squeeze force of 4.0kN, energizing time of 0.5 second, and energizing current of 12 kA to prepare a welded joint. The LME resistance at the time of production was evaluated.

<Examples 2 to 24 and Comparative Examples 25 to 37>

Except for making each chemical composition the one described in Table 1, making the conditions of the pretreatment step and annealing step the ones described in Table 2, and making the plating type the one described in Table 3, the same procedure was followed as in Example 1 to produce a welded joint and evaluate the LME resistance at the time of production. Note that, in No. 33, steel sheet increased in surface roughness by skin pass rolling was used. In No. 37, instead of shot blasting, grinding by a brush rolls was used for surface treatment.

In the plating types of Table 3, "a" indicates Zn-0.14%Al hot dip galvannealing, "b" indicates Zn-0.14%Al hot dip galvanizing without alloying, and "c" indicates Zn-1.5%Al-1.5%Mg. Further, "no plating" indicates no plating applied. Note that No. 2 of an example of the "non plated" steel sheet which is not plated was immediately before spot welded with steel sheet plated including zinc 10 times or more using weld electrodes to produce a welded joint.

[Table 1]

Table 1

| No. | Class | Chemical composition (mass%), balance: Fe and impurities | | | | | | | | | | |
|-----|-------|------|------|------|--------|--------|--------|--------|--------|--------|----------|----------|
|     |       | C | Si | Mn | Sol. Al | P | S | N | B | Ti | Others | Si+sol.Al |
| 1 | Ex. | 0.08 | 1.5 | 2.0 | 0.0 | 0.0001 | 0.0001 | 0.0001 | - | - |  | 1.5 |
| 2 | Ex. | 0.08 | 1.5 | 2.0 | 0.0 | 0.0001 | 0.0005 | 0.0008 | 0.0004 | 0.0002 |  | 1.5 |
| 3 | Ex. | 0.10 | 1.2 | 2.2 | 0.3 | 0.0080 | 0.0002 | 0.0009 | 0.0004 | 0.0004 |  | 1.5 |
| 4 | Ex. | 0.10 | 1.0 | 2.2 | 0.5 | 0.0080 | 0.0002 | 0.0004 | 0.0006 | 0.0002 | Hf:0.001 | 1.5 |
| 5 | Ex. | 0.10 | 1.0 | 2.2 | 0.5 | 0.0070 | 0.0003 | 0.0005 | 0.0008 | 0.0008 |  | 1.5 |
| 6 | Ex. | 0.10 | 0.9 | 2.2 | 0.3 | 0.0020 | 0.0003 | 0.0001 | 0.0010 | 0.0009 |  | 1.2 |
| 7 | Ex. | 0.20 | 1.0 | 2.0 | 0.5 | 0.0100 | 0.0009 | 0.0009 | 0.0003 | 0.0010 | Mg:0.001 | 1.5 |
| 8 | Ex. | 0.20 | 1.0 | 2.0 | 0.4 | 0.0020 | 0.0009 | 0.0004 | 0.0005 | 0.0006 | Zr:0.015 | 1.4 |

(continued)

| No. | Class | C | Si | Mn | Sol. Al | P | S | N | B | Ti | Others | Si+sol.Al |
|---|---|---|---|---|---|---|---|---|---|---|---|---|
| | | | | | | Chemical composition (mass%), balance: Fe and impurities | | | | | | |
| 9 | Ex. | 0.20 | 0.8 | 2.2 | 0.7 | 0.0008 | 0.0001 | 0.0007 | 0.0001 | 0.0009 | | 1.5 |
| 10 | Ex. | 0.20 | 1.0 | 2.5 | 0.5 | 0.0017 | 0.0002 | 0.0002 | 0.0002 | 0.0001 | Cr:0.10 | 1.5 |
| 11 | Ex. | 0.20 | 0.9 | 2.2 | 0.4 | 0.0011 | 0.0007 | 0.0008 | 0.0001 | 0.0005 | Cu:0.0007 | 1.3 |
| 12 | Ex. | 0.20 | 1.0 | 2.3 | 0.5 | 0.0031 | 0.0006 | 0.0003 | 0.0006 | 0.0009 | | 1.5 |
| 13 | Ex. | 0.20 | 1.0 | 2.2 | 0.5 | 0.0065 | 0.0006 | 0.0004 | 0.0009 | 0.0004 | Ni:0.08 | 1.5 |
| 14 | Ex. | 0.20 | 0.8 | 2.2 | 0.7 | 0.0008 | 0.0001 | 0.0007 | 0.0001 | 0.0009 | | 1.5 |
| 15 | Ex. | 0.25 | 1.0 | 2.2 | 0.5 | 0.0012 | 0.0010 | 0.0002 | 0.0005 | 0.0003 | Nb:0.010 | 1.5 |
| 16 | Ex. | 0.25 | 1.0 | 2.2 | 0.5 | 0.0040 | 0.0009 | 0.0009 | 0.0006 | 0.0007 | V:0.009 | 1.5 |
| 17 | Ex. | 0.30 | 0.8 | 5.0 | 0.7 | 0.0099 | 0.0009 | 0.0001 | 0.0005 | 0.0003 | | 1.5 |
| 18 | Ex. | 0.30 | 0.8 | 0.3 | 0.7 | 0.0110 | 0.0007 | 0.0009 | 0.0006 | 0.0004 | | 1.5 |
| 19 | Ex. | 0.35 | 0.8 | 2.2 | 0.7 | 0.0092 | 0.0006 | 0.0010 | 0.0004 | 0.0005 | Mo:0.09 | 1.5 |
| 20 | Ex. | 0.35 | 1.0 | 2.2 | 0.5 | 0.0091 | 0.0002 | 0.0008 | 0.0009 | 0.0004 | REM:0.0008 | 1.5 |
| 21 | Ex. | 0.40 | 1.0 | 2.2 | 0.5 | 0.0045 | 0.0001 | 0.0001 | 0.0007 | 0.0002 | | 1.5 |
| 22 | Ex. | 0.40 | 1.0 | 3.0 | 0.5 | 0.0035 | 0.0002 | 0.0007 | 0.0004 | 0.0009 | W:0.005 | 1.5 |
| 23 | Ex. | 0.40 | 1.0 | 2.2 | 0.5 | 0.0082 | 0.0004 | 0.0009 | 0.0008 | 0.0003 | | 1.5 |
| 24 | Ex. | 0.40 | 0.8 | 2.2 | 0.7 | 0.0080 | 0.0009 | 0.0006 | 0.0010 | 0.0003 | Ca:0.0005 | 1.5 |
| 25 | Comp. ex. | 0.44 | 1.0 | 2.0 | 0.3 | 0.0100 | 0.0003 | 0.0004 | 0.0003 | 0.0008 | | 1.3 |
| 26 | Comp. ex. | 0.20 | 0.3 | 2.0 | 0.3 | 0.0100 | 0.0006 | 0.0005 | 0.0005 | 0.0001 | | 0.6 |
| 27 | Comp. ex. | 0.20 | 2.2 | 2.0 | 0.4 | 0.0100 | 0.0005 | 0.0005 | 0.0003 | 0.0007 | | 2.6 |
| 28 | Comp. ex. | 0.20 | 1.0 | 2.0 | 2.1 | 0.0100 | 0.0004 | 0.0006 | 0.0009 | 0.0001 | | 3.1 |
| 29 | Comp. ex. | 0.20 | 1.0 | 2.0 | 0.4 | 0.0100 | 0.0004 | 0.0008 | 0.0004 | 0.0008 | | 1.4 |
| 30 | Comp. ex. | 0.08 | 1.0 | 2.0 | 0.4 | 0.0100 | 0.0005 | 0.0001 | 0.0005 | 0.0004 | | 1.4 |
| 31 | Comp. ex. | 0.20 | 1.0 | 2.0 | 0.5 | 0.0100 | 0.0004 | 0.0003 | 0.0006 | 0.0008 | | 1.5 |
| 32 | Comp. ex. | 0.20 | 1.0 | 2.0 | 0.5 | 0.0100 | 0.0002 | 0.0006 | 0.0005 | 0.0005 | | 1.5 |
| 33 | Comp. ex. | 0.20 | 1.0 | 2.0 | 0.5 | 0.0100 | 0.0008 | 0.0009 | 0.0004 | 0.0002 | | 1.5 |
| 34 | Comp. ex. | 0.10 | 1.0 | 2.0 | 0.5 | 0.0100 | 0.0005 | 0.0005 | 0.0004 | 0.0002 | | 1.5 |
| 35 | Comp. ex. | 0.20 | 1.0 | 2.0 | 0.5 | 0.0100 | 0.0005 | 0.0005 | 0.0004 | 0.0002 | | 1.5 |
| 36 | Comp. ex. | 0.20 | 1.0 | 2.0 | 0.5 | 0.0100 | 0.0005 | 0.0005 | 0.0004 | 0.0002 | | 1.5 |

(continued)

| No. | Class | Chemical composition (mass%), balance: Fe and impurities | | | | | | | | | | |
| | | C | Si | Mn | Sol. Al | P | S | N | B | Ti | Others | Si+sol.Al |
| 37 | Comp. ex. | 0.20 | 1.0 | 2.0 | 0.5 | 0.0100 | 0.0005 | 0.0005 | 0.0004 | 0.0002 | | 1.5 |

※ Underlines indicate outside scope of present invention.

[Table 2]

Table 2

| No. | Class | Pretreatment step | | Annealing step | | |
| | | Blasted amount (kg/m$^2$) | Plated base sheet surface roughness | Holding temp. (°C) | Holding time (s) | Dew point (°C) |
| 1 | Ex. | 5 | A | 800 | 40 | 0 |
| 2 | Ex. | 5 | A | 800 | 50 | 0 |
| 3 | Ex. | 15 | A | 800 | 60 | 0 |
| 4 | Ex. | 20 | A | 800 | 80 | 0 |
| 5 | Ex. | 50 | AA | 820 | 100 | 0 |
| 6 | Ex. | 100 | AA | 840 | 100 | 0 |
| 7 | Ex. | 100 | AA | 860 | 100 | 0 |
| 8 | Ex. | 100 | AA | 860 | 100 | 0 |
| 9 | Ex. | 100 | AA | 860 | 100 | 0 |
| 10 | Ex. | 100 | AA | 860 | 100 | 0 |
| 11 | Ex. | 100 | AA | 860 | 100 | 0 |
| 12 | Ex. | 30 | AA | 860 | 100 | 0 |
| 13 | Ex. | 100 | AA | 860 | 100 | 0 |
| 14 | Ex. | 400 | AA | 860 | 100 | 0 |
| 15 | Ex. | 100 | AA | 860 | 100 | 0 |
| 16 | Ex. | 100 | AA | 860 | 100 | 0 |
| 17 | Ex. | 100 | AA | 860 | 100 | 0 |
| 18 | Ex. | 100 | AA | 860 | 100 | 0 |
| 19 | Ex. | 100 | AA | 860 | 100 | 0 |
| 20 | Ex. | 100 | A | 860 | 100 | 0 |
| 21 | Ex. | 300 | AA | 860 | 100 | 0 |
| 22 | Ex. | 100 | AA | 860 | 100 | -20 |
| 23 | Ex. | 200 | AA | 860 | 100 | 0 |
| 24 | Ex. | 100 | AA | 860 | 100 | 0 |
| 25 | Comp. ex. | 15 | A | 800 | 60 | 0 |
| 26 | Comp. ex. | 15 | A | 800 | 60 | 0 |
| 27 | Comp. ex. | 15 | A | 800 | 60 | 0 |

(continued)

| No. | Class | Pretreatment step | | Annealing step | | |
|---|---|---|---|---|---|---|
| | | Blasted amount (kg/m²) | Plated base sheet surface roughness | Holding temp. (°C) | Holding time (s) | Dew point (°C) |
| 28 | Comp. ex. | 15 | A | 800 | 60 | 0 |
| 29 | Comp. ex. | 15 | A | 720 | 60 | 0 |
| 30 | Comp. ex. | 15 | A | 920 | 60 | 0 |
| 31 | Comp. ex. | 15 | A | 800 | 10 | 0 |
| 32 | Comp. ex. | 0 | A | 800 | 60 | 0 |
| 33 | Comp. ex. | 15 | B | 800 | 60 | 0 |
| 34 | Comp. ex. | 500000 | A | 800 | 60 | 0 |
| 35 | Comp. ex. | 15 | A | 800 | 60 | -35 |
| 36 | Comp. ex. | 15 | A | 800 | 60 | 25 |
| 37 | Comp. ex. | Grinding | A | 800 | 60 | 0 |
| ※ Underlines indicate outside scope of preferable method of production | | | | | | |

<Evaluation of Structure Around Welded Part>

(Depth Where C Concentration is 0.01% or Less)

A welded joint was cut to obtain a sample. This was measured by GDS five times in the sheet thickness direction to find the depth with a C concentration of 0.01% or less starting from the interface of the plating layer and steel sheet at a position becoming a non-heat affected zone separated by 5 mm or more from an outside end of the nugget of the spot welded parts. This was shown as the "C≤0.01% depth" of Table 3.

(Roughness of Steel Sheet Surface or Steel Surface/Plating Interface)

Further, at a position becoming a non-heat affected zone separated by 5 mm or more from an outside end of the nugget of the spot welded part, the roughness of the surface of the high strength steel sheet, while in a steel sheet provided with a plating, the roughness of the surface of the steel sheet exposed by removing the plating, was measured for roughness in the same way as before annealing. This was shown by the "steel sheet surface or steel sheet/plating interface roughness" of Table 3.

(Thickness of Layer With Area Ratio of Cementite of 10% or Less)

Further, the thickness of the low cementite layer in the thickness direction of the steel sheet from the surface of the high strength steel sheet was measured at a position of 0 to 100 $\mu$m to the outside from an outside end of the weld shoulder part. This was shown in the column of "cementite 10% or less thickness" of Table 3. The thickness was measured at five points at equal intervals in a 500 $\mu$m range. The average value was used.

(Evaluation of Tensile Strength)

In each steel sheet used for production of a welded joint, a JIS No. 5 tensile test piece having a direction perpendicular to the rolling direction as the long direction was taken. A tensile test was performed based on JIS Z 2241: 2011 to find the tensile strength. This was evaluated as follows: If Evaluation A or more, this corresponded to high strength steel sheet forming the welded joint of the present invention.

Evaluation AAA: 1180 MPa or more
Evaluation AA: 980 MPa or more and less than 1180 MPa
Evaluation A: 780 MPa or more and less than 980 MPa
Evaluation B: less than 780 MPa

(LME Resistance)

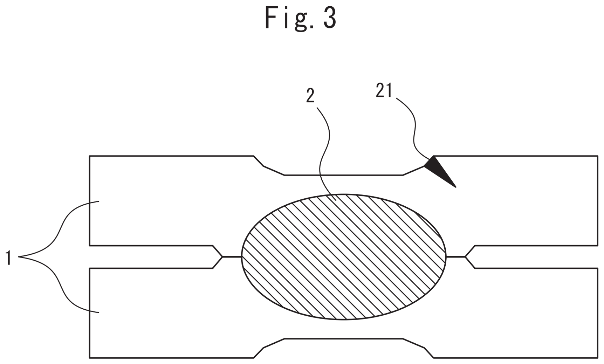

Referring to FIG. 3, the evaluation of the LME resistance will be explained. The LME resistance was evaluated by superposing two steel sheets 1, spot welding them, the measuring the lengths of the LME cracking formed at the weld shoulder part 5 and weld shoulder outside part 6 in the spot welded part 2 shown (cracking 21 of shoulder part and outside the shoulder). The lengths of the cracking 21 of the shoulder part and outside the shoulder were used for evaluation as follows: In the present embodiment, if the evaluation A or more, it was judged that the LME resistance was excellent and the problem of the present invention was solved.

Evaluation AAA: 0 $\mu$m
Evaluation AA: more than 0 $\mu$m and less than 60 $\mu$m
Evaluation A: 60 $\mu$m or more and less than 120 $\mu$m
Evaluation B: 120 $\mu$m or more

The results of the evaluation are shown in Table 3.

[Table 3]

Table 3

| No. | Class | Non heat affected zone | | Heat affected zone | Plating type | Performance | |
| | | C≤0.01% depth ($\mu$m) | Steel sheet surface or steel sheet/plating interface roughness ($\mu$m) | Cementite 10% or less thickness ($\mu$m) | | Tensile strength (MPa) | LME resistance |
|---|---|---|---|---|---|---|---|
| 1 | Ex. | 3 | 3.0 | 5 | a | A | A |
| 2 | Ex. | 3 | 2.7 | 5 | No plating | A | A |
| 3 | Ex. | 4 | 2.3 | 7 | b | AA | A |
| 4 | Ex. | 5 | 2.4 | 10 | b | A | A |
| 5 | Ex. | 7 | 1.9 | 13 | b | AA | AAA |
| 6 | Ex. | 12 | 1.6 | 21 | b | AA | AAA |
| 7 | Ex. | 19 | 1.4 | 22 | b | AA | AAA |
| 8 | Ex. | 22 | 1.5 | 24 | b | AA | AAA |
| 9 | Ex. | 22 | 1.4 | 24 | c | AA | AAA |
| 10 | Ex. | 24 | 1.3 | 24 | b | AA | AAA |
| 11 | Ex. | 22 | 1.9 | 24 | b | AA | AAA |
| 12 | Ex. | 6 | 1.3 | 13 | b | AA | AA |
| 13 | Ex. | 22 | 1.1 | 24 | b | AA | AAA |
| 14 | Ex. | 29 | 1.4 | 28 | b | AA | AAA |
| 15 | Ex. | 23 | 1.5 | 22 | b | AAA | AAA |
| 16 | Ex. | 22 | 1.3 | 20 | b | AAA | AAA |
| 17 | Ex. | 22 | 1.8 | 24 | b | AAA | AAA |
| 18 | Ex. | 25 | 1.8 | 22 | b | AA | AAA |
| 19 | Ex. | 22 | 1.4 | 24 | b | AAA | AAA |
| 20 | Ex. | 22 | 2.3 | 24 | a | AA | AA |
| 21 | Ex. | 40 | 1.0 | 39 | b | AAA | AAA |

(continued)

| No. | Class | Non heat affected zone | | Heat affected zone | Plating type | Performance | |
| | | C≤0.01% depth (μm) | Steel sheet surface or steel sheet/plating interface roughness (μm) | Cementite 10% or less thickness (μm) | | Tensile strength (MPa) | LME resistance |
|---|---|---|---|---|---|---|---|
| 22 | Ex. | 22 | 1.7 | 24 | b | AAA | AAA |
| 23 | Ex. | 31 | 1.4 | 33 | c | AAA | AAA |
| 24 | Ex. | 24 | 1.7 | 23 | b | AAA | AAA |
| 25 | Comp. ex. | 2 | 2.6 | 4 | b | AAA | B |
| 26 | Comp. ex. | 2 | 2.6 | 3 | b | AAA | B |
| 27 | Comp. ex. | 2 | 2.3 | 3 | b | AAA | B |
| 28 | Comp. ex. | 3 | 2.5 | 3 | b | AAA | B |
| 29 | Comp. ex. | 3 | 2.6 | 2 | b | AAA | B |
| 30 | Comp. ex. | 2 | 2.6 | 6 | b | AAA | B |
| 31 | Comp. ex. | 2 | 2.2 | 4 | b | AAA | B |
| 32 | Comp. ex. | 2 | 2.7 | 4 | b | AAA | B |
| 33 | Comp. ex. | 12 | 3.3 | 14 | b | AAA | B |
| 34 | Comp. ex. | 44 | 2.5 | 82 | b | B | A |
| 35 | Comp. ex. | 2 | 2.6 | 3 | b | AAA | B |
| 36 | Comp. ex. | 2 | 2.6 | 2 | b | AAA | B |
| 37 | Comp. ex. | 2 | 2.7 | 4 | b | AAA | B |

Underlines indicate outside scope of present invention or desired properties not obtained.

No. 25 is a comparative example with a large content of C of the steel sheet. Since the content of C of the steel sheet is large, even if performing high dew point annealing, it is believed that the C concentration at the surface layer of the steel sheet did not fall. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 26 is a comparative example with a small content of Si of the steel sheet. Since the content of Si of the steel sheet was small, even if performing high dew point annealing, it is believed decarburization at the surface layer did not progress. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 27 is a comparative example with a large content of Si of the steel sheet. Since the content of Si of the steel sheet was large, even if performing high dew point annealing, it is believed external oxidation proceeded and oxides (scale) were formed at the surface layer of the steel sheet and decarburization at the surface was suppressed. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 28 is a comparative example with a large content of sol. Al of the steel sheet. Since the content of sol. Al of the steel sheet was large, even if performing high dew point annealing, it is believed external oxidation proceeded and oxides (scale) were formed at the surface layer of the steel sheet and decarburization at the surface was suppressed. Therefore, the thickness of the layer with a cementite area ratio of 10% or less of the heat affected zone was small. As a result, the LME resistance at the time of production of the welded joint became inferior.

No. 29 was low in holding temperature at the time of annealing, therefore it is believed decarburization was not sufficiently promoted at the time of annealing. For this reason, the thickness of the layer with a cementite area ratio of 10% or less of the heat affected zone was small. As a result, the LME resistance at the time of production of the welded joint became inferior.

No. 30 was high in holding temperature at the time of annealing, therefore it is believed decarburization was not sufficiently promoted at the time of annealing. Therefore, the depth where the C concentration was 0.01% or less of the non-heat affected zone became small. As a result, LME resistance at the time of production of the welded joint became inferior.

No. 31 was short in holding time at the time of annealing, therefore decarburization was not sufficiently promoted at the time of annealing. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 32 was not subjected to shot blasting in the pretreatment step, so it is believed strain was not introduced to the surface of the steel sheet and decarburization did not proceed at the time of annealing. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 33 used steel sheet with a large surface roughness, therefore the roughness of the steel sheet/plating interface after annealing became greater and stress concentration easily occurred. As a result, the LME resistance at the time of production of the welded joint became inferior.

No. 34 had a large amount of abrasive in the shot blasting. As a result, it is believed decarburization proceeded too much. For this reason, the steel sheet became low in tensile strength.

No. 35 was low in dew point at the time of annealing, therefore it is believed that the outside part of the steel sheet was formed with a layer including oxides of Si, Mn, Al, etc. and decarburization did not proceed. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

No. 36 was high in dew point at the time of annealing, therefore it is believed that the outside part of the steel sheet was formed with a layer including oxides of Si, Mn, Al, etc. and decarburization was not promoted. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

In No. 37, instead of shot blasting, surface treatment was performed by grinding using brush rolls, therefore it is believed sufficient strain was not introduced into the surface of the steel sheet and decarburization at the time of annealing did not proceed. Therefore, the depth where the C concentration was 0.01% or less of the non-heat affected zone and the thickness of the layer with a cementite area ratio of 10% or less of the heat affected zone were small. As a result, the LME resistance at the time of production of the welded joint became inferior.

On the other hand, Nos. 1 to 24 are examples of the present invention and were suppressed in LME at the time of production. It was confirmed that in the examples where the depth where the C concentration was 0.01% or less of the non-heat affected zone and the thickness of the layer with a cementite area ratio of 10% or less of the heat affected zone were large, there was particularly excellent LME resistance at the time of production of the welded joint.

[INDUSTRIAL APPLICABILITY]

According to the present invention, a welded joint having high LME resistance can be provided. The steel sheet and plated steel sheet can be suitably used for automobiles, household electric appliances, building materials, and other applications, in particular for automobiles. Therefore, the present invention is an invention with extremely high industrial applicability.

REFERENCE SIGNS LIST

1 steel sheet
2 spot welded part
3 nugget
4 indentation
5 weld shoulder part
6 weld shoulder outside part
7 heat affected zone
8 overlaid surfaces

11 low cementite layer
12 hard structures
21 cracking of shoulder part and shoulder outside
A welding electrode

**Claims**

1. A welded joint comprising

   an overlaid plurality of steel sheets and
   a spot welded part joining the plurality of steel sheets,
   wherein the spot welded part comprises a nugget, an indentation part indented by an electrode, and a weld shoulder part of a peripheral edge part of the indentation part;
   at least the one steel sheet arranged at an outermost side among the plurality of steel sheets is a high strength steel sheet with a tensile strength of 780 MPa or more;
   a chemical composition of the high strength steel sheet comprises, by mass%,
   C: 0.08 to 0.40%,
   Si: 0.4 to 2.0%,
   Mn: 0.1 to 5.0%,
   sol. Al: 0 to 2.0%,
   P: 0.0300% or less,
   S: 0.0300% or less,
   N: 0.0100% or less,
   B: 0 to 0.0100%,
   Ti: 0 to 0.1500%,
   Nb: 0 to 0.150%,
   V: 0 to 0.150%,
   Cr: 0 to 2.00%,
   Ni: 0 to 2.00%,
   Cu: 0 to 2.0000%,
   Mo: 0 to 1.00%,
   W: 0 to 1.000%,
   Ca: 0 to 0.1000%,
   Mg: 0 to 0.100%,
   Zr: 0 to 0.100%,
   Hf: 0 to 0.100%,
   REM: 0 to 0.1000% and
   a balance of Fe and impurities;
   in a region separated by 5 mm or more from an outside end of the nugget,
   in a depth direction from the surface of the high strength steel sheet, a depth with a C concentration measured by GDS of 0.01% or less is 3 $\mu$m or more and a roughness of a surface of the high strength steel sheet is an arithmetic average roughness Ra of 3.0 $\mu$m or less; and
   in a range of 0 to 100 $\mu$m from an outside end of the weld shoulder part,
   in a depth direction from the surface of the high strength steel sheet, a thickness of a layer with an area ratio of cementite of 10% or less is 5 $\mu$m or more.

2. The welded joint according to claim 1, wherein part or all of the surface of one or more steel sheets among the plurality of steel sheets is provided with a plating layer containing Zn.

3. The welded joint according to claim 1 or 2, wherein a total value of contents of Si and sol. Al is less than 1.8%.

4. The welded joint according to claim 1 or 2, wherein a depth with a C concentration measured by GDS of 0.01% or less is 5 $\mu$m or more.

5. The welded joint according to claim 1 or 2, wherein a depth with a C concentration measured by GDS of 0.01% or less is 7 $\mu$m or more.

# Fig. 1

（a）

（b）

Fig. 2

Fig. 3

## INTERNATIONAL SEARCH REPORT

| International application No. |
|---|
| **PCT/JP2024/000663** |

**A.    CLASSIFICATION OF SUBJECT MATTER**

*C22C 38/00*(2006.01)i; *C22C 38/58*(2006.01)i; *B23K 11/16*(2006.01)n; *C21D 9/46*(2006.01)n; *C22C 18/00*(2006.01)n;
*C22C 18/04*(2006.01)n
   FI:   C22C38/00 301S; C22C38/00 301T; C22C38/58; C21D9/46 G; C21D9/46 J; C22C18/04; B23K11/16 311; C22C18/00

According to International Patent Classification (IPC) or to both national classification and IPC

**B.    FIELDS SEARCHED**

Minimum documentation searched (classification system followed by classification symbols)

   C22C38/00-38/60; B23K11/16; C21D9/46

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2017-2384 A (NIPPON STEEL & SUMITOMO METAL CORPORATION) 05 January 2017 (2017-01-05)<br>   entire text | 1-5 |
| A | WO 2021/200580 A1 (JFE STEEL CORPORATION) 07 October 2021 (2021-10-07)<br>   entire text | 1-5 |
| A | WO 2021/200579 A1 (JFE STEEL CORPORATION) 07 October 2021 (2021-10-07)<br>   entire text | 1-5 |
| A | WO 2022/239071 A1 (NIPPON STEEL CORPORATION) 17 November 2022 (2022-11-17)<br>   entire text | 1-5 |
| A | WO 2022/210396 A1 (NIPPON STEEL CORPORATION) 06 October 2022 (2022-10-06)<br>   entire text | 1-5 |

☑ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/000663**

| C. | DOCUMENTS CONSIDERED TO BE RELEVANT | |
|---|---|---|
| Category* | Citation of document, with indication, where appropriate, of the relevant passages | Relevant to claim No. |
| A | WO 2020/136989 A1 (JFE STEEL CORPORATION) 02 July 2020 (2020-07-02)<br>entire text | 1-5 |
| A | WO 2020/136988 A1 (JFE STEEL CORPORATION) 02 July 2020 (2020-07-02)<br>entire text | 1-5 |
| A | JP 2010-43323 A (SUMITOMO METAL INDUSTRIES, LTD.) 25 February 2010 (2010-02-25)<br>entire text | 1-5 |
| A | JP 2019-178405 A (JFE STEEL CORPORATION) 17 October 2019 (2019-10-17)<br>paragraph [0005] | 1-5 |
| A | WO 2020/129337 A1 (JFE STEEL CORPORATION) 25 June 2020 (2020-06-25)<br>paragraph [0014] | 1-5 |
| A | JP 2002-3948 A (SONY CORPORATION) 09 January 2002 (2002-01-09)<br>paragraph [0012] | 1-5 |

**INTERNATIONAL SEARCH REPORT**
Information on patent family members

International application No.

**PCT/JP2024/000663**

| Patent document cited in search report | | | Publication date (day/month/year) | Patent family member(s) | | Publication date (day/month/year) |
|---|---|---|---|---|---|---|
| JP | 2017-2384 | A | 05 January 2017 | (Family: none) | | |
| WO | 2021/200580 | A1 | 07 October 2021 | US 2023/0151451 A1 entire text EP 4130324 A1 KR 10-2022-0145391 A CN 115362279 A | | |
| WO | 2021/200579 | A1 | 07 October 2021 | US 2023/0129828 A1 entire text EP 4130323 A1 KR 10-2022-0145390 A CN 115349028 A | | |
| WO | 2022/239071 | A1 | 17 November 2022 | CN 117280068 A entire text KR 10-2023-0165834 A | | |
| WO | 2022/210396 | A1 | 06 October 2022 | EP 4296396 A1 entire text KR 10-2023-0148847 A CN 117098867 A | | |
| WO | 2020/136989 | A1 | 02 July 2020 | US 2022/0098687 A1 entire text EP 3904553 A1 CN 113227429 A KR 10-2021-0094620 A | | |
| WO | 2020/136988 | A1 | 02 July 2020 | US 2022/0074013 A1 entire text EP 3904552 A1 CN 113227428 A KR 10-2021-0095189 A | | |
| JP | 2010-43323 | A | 25 February 2010 | (Family: none) | | |
| JP | 2019-178405 | A | 17 October 2019 | (Family: none) | | |
| WO | 2020/129337 | A1 | 25 June 2020 | US 2021/0310091 A1 paragraph [0015] EP 3901301 A1 CN 113227423 A KR 10-2021-0091282 A | | |
| JP | 2002-3948 | A | 09 January 2002 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116531 A
- WO 2020218575 A

**Non-patent literature cited in the description**

- **FUMIHIKO HASEGAWA** ; **JUNICHI ARAI** ; **TSUNE-SHICHI TANAKA**. Correlation Between Static Strength Parameters. *Materials*, vol. 39 (442), 859-863